# EUROPEAN PATENT APPLICATION

(11) **EP 4 660 003 A1**
(43) Date of publication of application: **10.12.2025**
(21) Application number: 24180446.7
(22) Date of filing: 06.06.2024
(51) Int. Cl.: B60N 2/28

(54) **A CHILD VEHICLE SEAT AS WELL AS A BASE SUITABLE FOR SUCH A CHILD VEHICLE SEAT**

(71) Applicant: Maxi Miliaan B.V., 5704 RD Helmond (NL)
(72) Inventor: Van Montfort, Donald Hendrikus, 6093 EL Heythuysen (NL)
(74) Representative: Veldman-Dijkers, Cornelia G. C.

(57) **Abstract**

A child vehicle seat comprises a base detachably connectable to a vehicle seat, a rotating part being rotatably connected to the base, whereby the rotating part being rotatable with respect to the base about a rotation axis from at least a forward facing position to a rearward facing position seen in a driving directing of the vehicle in use and vice versa, a sliding part being slidably connected to the base, whereby the sliding part being slidable with respect to the base in a sliding direction, a child seat connected to the base via the sliding part and the rotating part. The whole child seat and the sliding part are slidable together with respect to the rotating part in the sliding direction extending substantially parallel to the driving direction of the vehicle from at least a first sliding position to a second sliding position and vice versa, wherein the child vehicle seat comprises first locking means to detachably lock the rotating part to the base in at least the forward facing position and the rearward facing position respectively as well as second locking means to detachably lock sliding of the sliding part with respect to the rotating part in the first sliding position and the second sliding position respectively.

## Description

### FIELD OF THE INVENTION

The invention relates to a child vehicle seat comprising a base detachably connectable to a vehicle seat, a rotating part being rotatably connected to the base, whereby the rotating part being rotatable with respect to the base about a rotation axis from at least a forward facing position to a rearward facing position seen in a driving directing of the vehicle in use and vice versa, a sliding part being slidably connected to the base, whereby the sliding part being slidable with respect to the base in a sliding direction, a child seat connected to the base via the sliding part and the rotating part.

The invention also relates to such a base suitable for such a child vehicle seat.

### BACKGROUND OF THE INVENTION

DE19744978C2 discloses an adaptor automatically latching into a traveling position and locked into place both during and after a release mechanism is changed from the traveling position to a loading position. The adaptor has a release mechanism by which a child seat can be placed in the loading position for climbing in and out of it, and into the traveling position. The adaptor automatically latches into the traveling position and is locked there, and during or after the operation of the release mechanism the seat is transferred from the traveling position into the loading position. The adaptor has at least one linear guide upon which the part of the adaptor on the vehicle's seat side can travel in relation to the part on the child's seat in the direction towards the seat back and in the opposite direction. On top of the linear guide a plate is located being rotatable with respect to the linear guide. A child seat is mounted on the rotatable plate. Only during loading the child seat together with the rotatable plate are movable in a forward direction to the loading position. Before and during traveling the child seat together with the rotatable plate are moved and maintained as close as possible to the backrest of the vehicle seat. Another disadvantage is that the linear guide must be relatively sturdy to support the child seat as well as the rotatable plate in case of a crash

### SUMMARY OF THE INVENTION

At least one of the objects of the invention is to provide a child vehicle seat that can always fulfill regulation requirements regarding the maximum dimension of the child vehicle seat may have when being mounted into a vehicle so that the child vehicle seat can be used in any vehicle to which the regulation requirements apply. At the same time, it is an object of the invention to provide a child vehicle seat that can exceed the maximum regulated dimension of the child vehicle seat in certain positions of the child vehicle seat to provide more space for the child or easier access to the child vehicle seat by vehicles providing enough space..

Another object of the invention is to provide a child vehicle seat whereby the child seat can be slideable when being rotated in a side facing position.

This object is accomplished with the child vehicle seat according to the invention in that the whole child seat and the sliding part are slidable together with respect to the rotating part in the sliding direction extending substantially parallel to the driving direction of the vehicle from at least a first sliding position to a second sliding position and vice versa, wherein the child vehicle seat comprises first locking means to detachably lock the rotating part to the base in at least the forward facing position and the rearward facing position respectively as well as second locking means to detachably lock sliding of the sliding part with respect to the rotating part in the first sliding position and the second sliding position respectively.

Since the sliding part is mounted on top of the rotating part, the rotating part will only be rotated with respect to the base and not be moved in the sliding direction.

Furthermore, the base or rotating part can easily be provided with means to prevent the sliding part to be slidable with respect to the rotating part.

During driving of the vehicle, the sliding direction extends in the driving direction of the vehicle. By means of the second locking means as well as possible other means the sliding part is maintained firmly fixed to the rotating part during a crash.

By having the sliding part mounted on top of the rotating part, the sliding part can also be used for sliding the child seat mounted thereon towards the door, when the child seat is being rotated by means of the rotating part into a side facing position. By the child vehicle seat according to the invention the child seat as a whole, meaning without being moved with respect to the sliding part, will be moved in the sliding direction and/or rotated about the rotation axis. Besides these movements it is also possible that the child seat can be reclined with respect to the sliding part. This is a complete different kind of movement.

An embodiment of the child vehicle seat according to the invention is characterized in that the rotating part is rotatable with respect to the base when the sliding part is in the first sliding position but not when the sliding part is in the second sliding position.

In this manner a user is forced to move the sliding part always back to the first sliding position before the rotating part, the sliding part mounted thereon and the whole child seat mounted on the sliding part can be rotated with respect to the base.

Depending on the vehicle, rotating the rotating part in the second sliding position would result in a collision of the child seat with the vehicle car seat or with other parts of the vehicle. By preventing the rotation of the rotating part, the sliding part mounted thereon and the whole child seat mounted on the sliding part in the second sliding position such a collision will be prevented.

Another embodiment of the child vehicle seat according to the invention is characterized in that in the second sliding position the whole child seat is located further in the driving direction of the vehicle than in the first sliding position, whereby the child seat is in a rearward facing position.

By this embodiment the rotating part, the sliding part mounted thereon and the whole child seat mounted on the sliding part can only be rotated when the rearward facing child seat is located relatively close to the backrest of the vehicle car seat. This is amongst others advantageous for relatively small vehicles. Furthermore, the opening of most vehicle doors, that open towards the rear end of the vehicle providing the largest opening at that part of the vehicle.

Another embodiment of the child vehicle seat according to the invention is characterized in that in the first sliding position the whole child seat is located further in the driving direction of the vehicle than in the second sliding position, whereby the child seat is in a forward facing position.

By this embodiment the rotating part, the sliding part mounted thereon and the whole child seat mounted on the sliding part can only be rotated when the child seat is located at a distance of the backrest of the vehicle car seat. This might be advantageous by larger vehicles having the wheel arch near the backrest of the vehicle car seat.

Another embodiment of the child vehicle seat according to the invention is characterized in that the rotating part is rotatable from at least the forward facing position or the rearward facing position to a side facing position directed to a door of the vehicle and vice versa, whereby in the side facing position the whole child seat and the sliding part are slidable together with respect to the rotating part in the sliding direction extending substantially perpendicular to the driving direction of the vehicle.

Since the sliding part is mounted on top of the rotating part, the sliding part can also be used for sliding the child seat mounted thereon towards the door, when the child seat is being rotated by means of the rotating part into a side facing position.

The child seat may be rotated to face a door entry of the vehicle allowing direct access to the front of the child seat. Further, the child seat may be extended toward the door entry of the vehicle by means of the sliding part, thereby shortening the distance the person loading the child must extend to safely place the child in the child seat or remove it from the child seat. Additionally, it offers the opportunity in case of a removable child seat such as an infant carrier, to lift the child seat in an easier manner from the sliding part.

Another embodiment of the child vehicle seat according to the invention is characterized in that the second locking means comprises at least one pen being movable against spring force in a direction extending parallel to the rotation axis, which pen cooperates with at least two passages, whereby the pen is movable connected to the sliding part whilst the at least two passages are located in the rotating part or vice versa, whereby when the pen is located in a first passage of the at least two passages, the sliding part is locked in the first sliding position whilst when the pen is located in a second passage the at least two passages, the sliding part is locked in the second sliding position.

The number of passages defines the number of different possible locked positions of the sliding part. The distance between the passages defines the distance that the sliding part can be moved.

For the movement of the sliding part in the driving direction, two passages will normally be sufficient, whereby the distance between the passages will be a few centimetres. When being in a side facing position, the movement of the sliding part in a direction towards the door of the vehicle, more than two passages are possible, whereby the distance between a first and a last passage can be more than 10 centimetres.

Another embodiment of the child vehicle seat according to the invention is characterized in that the child vehicle seat comprises unlocking means to unlock the second locking means, which unlocking means comprises a switch provided with a slot extending under an angle between 20 and 70 degrees with the rotating axis, whereby the pen is provided with a locking pin being slidably located in the slot, which switch is movable against spring force, thereby moving the pen out of the passage.

Such a way of moving the pen in and out of the passage is reliable and easy to manufacture. Such a pen can be designed in such manner that it will remain in position in case of a crash. The pen will give clear feedback to the parent when the pen has reached its locked position.

Another embodiment of the child vehicle seat according to the invention is characterized in that the unlocking means comprises a rotatable element cooperating with two switches, each cooperating with a pen, whereby by rotating the rotatable element against spring force, the switches are movable, thereby moving the pens out of the respective passages.

In this manner two switches can easily be operated simultaneously by moving them towards each other in a kind of squeezing operation. Such a squeezing operation is easy to be performed by a parent from any position when standing next to the open door of a vehicle.

Another embodiment of the child vehicle seat according to the invention is characterized in that the unlocking means comprises a push button cooperating with at least one switch cooperating with a pen, whereby by pushing the push button against spring force, the switch is movable, thereby moving the pens out of the respective passages.

By means of a push button one or more switches can easily be operated. Such a pushing operation is easy to be performed by a parent from any position when standing next to the open door of a vehicle.

Another embodiment of the child vehicle seat according to the invention is characterized in that the pen is movable connected to the rotating part whilst the at least two passages are located in the sliding part, whereby the child vehicle seat comprises unlocking means to unlock the second locking means, which unlocking means comprises a handle provided with a handle part is provided with an opening through which the pen can extends when the pen is located in one of the passages in the sliding part, whereby the pen is movable against spring force by firstly moving the handle part to move the pen out of the opening, and subsequently moving the sliding part, thereby moving the pen out of one of the passages until the pen is being moved under spring force into another one of the passages in the sliding part, whereafter the handle is being released and the pen is being moved into the opening of the handle part.

The handle can be positioned at any desired location of the child vehicle seat to be able to unlock the pen(s). Depending on the position of the handle, the child seat can be maintained on the sliding part to be able to move the sliding part and the child seat into the sliding direction. It is also possible that the handle can be operated by pulling at one side and/or pushing on the opposite side, allowing operation by the parent when the seat is in forward facing and in rearward facing direction.

### BRIEF DESCRIPTION OF THE DRAWINGS

The child vehicle seat according to the invention will further be explained with reference to the drawings, wherein,
figure 1 is a side view of a first embodiment of a child vehicle seat according to the invention with a first child seat in a rearward facing orientation,
figure 2 is an enlarged side view the child vehicle seat as shown in figure 1 in a first sliding position,
figure 3 is an enlarged side view the child vehicle seat as shown in figure 1 without a child seat,
figure 4 is an enlarged side view the child vehicle seat as shown in figure 1 with a second child seat,
figure 5 is an enlarged side view the child vehicle seat as shown in figure 1 with the first child seat in a rearward facing orientation and in a second sliding position,
figure 6 is an enlarged side view the child vehicle seat as shown in figure 5 without a child seat,
figure 7 is an enlarged side view the child vehicle seat as shown in figure 5 with a second child seat,
figure 8 is a side view of a first embodiment of a child vehicle seat according to the invention with a first child seat in a forward-facing orientation,
figure 9 is an enlarged side view the child vehicle seat as shown in figure 8 in a second sliding position, with a reclined first child seat,
figure 10 is an enlarged side view the child vehicle seat as shown in figure 8 without a child seat,
figure 11 is an enlarged side view the child vehicle seat as shown in figure 8 with the first child seat in a forward-facing orientation and in a first sliding position,
figure 12 is an enlarged side view the child vehicle seat as shown in figure 11 without a child seat,
figure 13 is a front view of a first embodiment of a child vehicle seat according to the invention with a first child seat in a side facing orientation,
figure 14 is a front view of a first embodiment of a child vehicle seat according to the invention with a second child seat in a side facing orientation,
figure 15A-B are perspective open views of a base of the first embodiment of a child vehicle seat according to the invention in a rearward facing orientation and in a first and second sliding position respectively,
figures 16A-C are a perspective view and detailed views of child vehicle seat according to the invention with a first embodiment of an unlocking mechanism according to the invention,
figures 17A-D are a perspective view and detailed views of child vehicle seat according to the invention with a second embodiment of an unlocking mechanism according to the invention,
figures 18A-B are detailed views of child vehicle seat according to the invention with a third embodiment of an unlocking mechanism according to the invention,
figure 19 is a detailed view of child vehicle seat according to the invention with a fourth embodiment of an unlocking mechanism according to the invention,
figures 20A-D are a top view and a perspective detailed view of child vehicle seat according to the invention in a fist sliding position and a second sliding position respectively with a fifth embodiment of an unlocking mechanism according to the invention,
figure 20E is a perspective view of child vehicle seat according to the invention as shown in the figures 20A-D with unlocking buttons of the fifth embodiment of the unlocking mechanism according to the invention,
figures 21-23 are views of a child vehicle seat according to the invention of the sixth embodiment of the unlocking mechanism according to the invention,
figure 24 is a perspective view of child vehicle seat according to the invention with a latch slidably connecting the sliding part to the rotating part.

In the drawings, like reference numerals refer to like elements.

### DESCRIPTION OF PREFERRED EMBODIMENTS

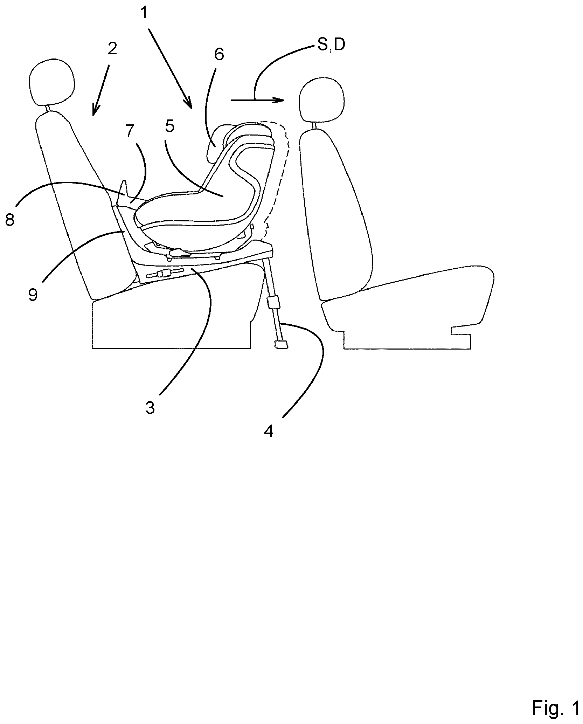

Figures 1-14 show different views of a first embodiment of a child vehicle seat 1 according to the invention in rearward, forward and side facing orientations and in a first and second sliding positions.

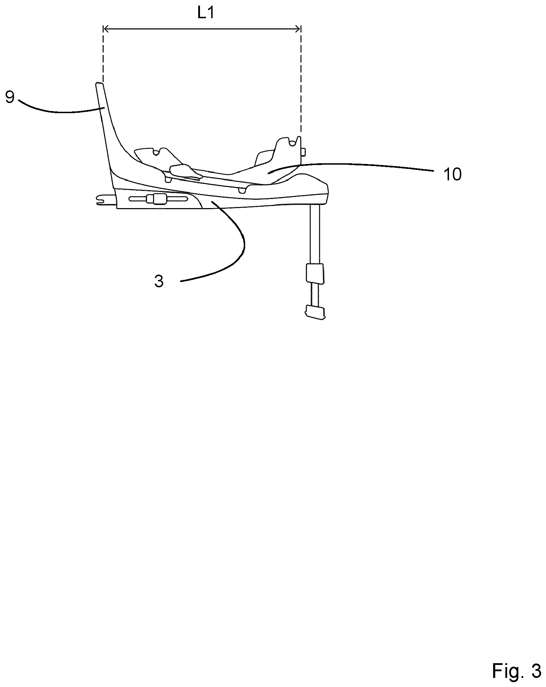

Figure 1 shows a vehicle car seat 2 on which a child vehicle seat 1 is mounted. The child vehicle seat 1 comprises a base 3 being connected to the vehicle car seat 2 with well-known ISOFIX connectors (see a.o. figure 3). The base 3 is provided with a well-known support leg 4 resting with its lower end on a floor of the vehicle. A child seat 5 is detachably mounted on the base 3 and can rotate and slide with respect to the base 3 as will be explained here below. However, if desired the child seat 5 can be fixed to the base 2 in a manner that it can rotate and slide with respect to the base 3 but cannot be removed from the base 3.

In the orientation as shown in figure 1 the child is facing rearwardly seen in the driving direction D of the vehicle. This is the rearward facing position.

A child 6 can sit in the child seat 5, whereby its legs 7 are directed towards the backrest of the vehicle seat. As can be seen, the feet 8 of the child 6 almost abut against an anti-rebound element 9 of the base 3. As will be explained here below the child seat 5 is slidable as a whole in a sliding direction S extending parallel to the driving direction D from a first sliding position (in solid lines) to a second sliding position (in dotted lines) to provide more space for the legs 7 and feet 8 of the child 6.

The child vehicle seat 1 in the first sliding position has dimensions fulfilling the regulation requirements so that the child vehicle seat 1 can be used in any vehicle to which the regulation requirements apply. However, in larger vehicles, the child seat 5 is slidable to the second sliding position (in dotted lines).

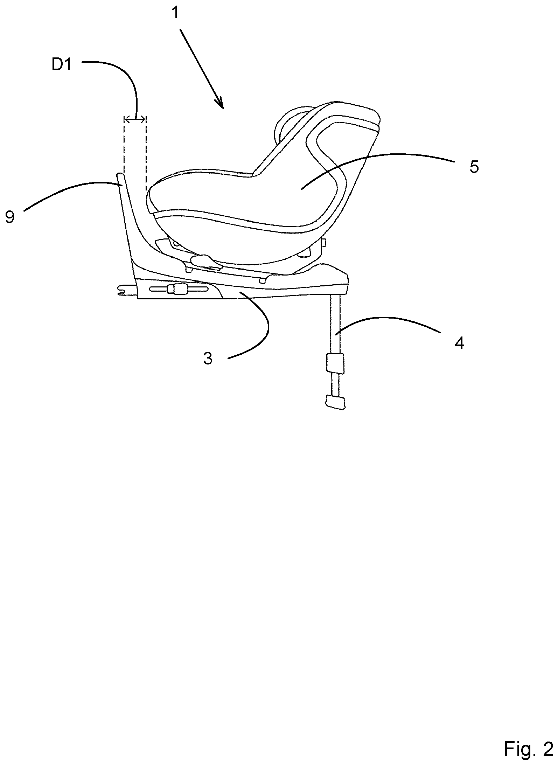

Figure 2 shows a distance D1 between a front end of the child seat 5 and the anti-rebound element 9 of the base 3, whereby the child seat 5 is in the first sliding position.

Figure 3 shows a distance L1 between the anti-rebound element 9 of the base 3 and a front end of a sliding part 10 of the child vehicle seat 1, whereby the sliding part 10 is in the first sliding position.

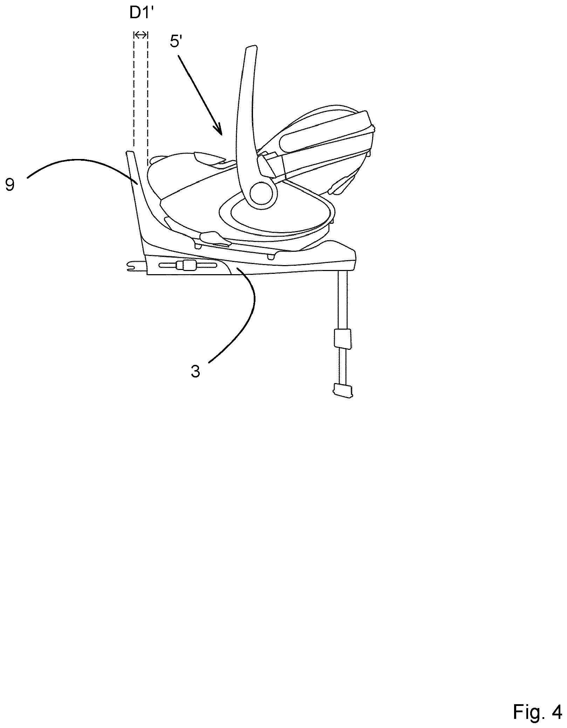

Figure 4 shows a distance D1' between a front end of another kind of a child seat 5' and the anti-rebound element 9 of the base 3. This child seat 5' is also mounted in a rearward facing orientation and is in the first sliding position.

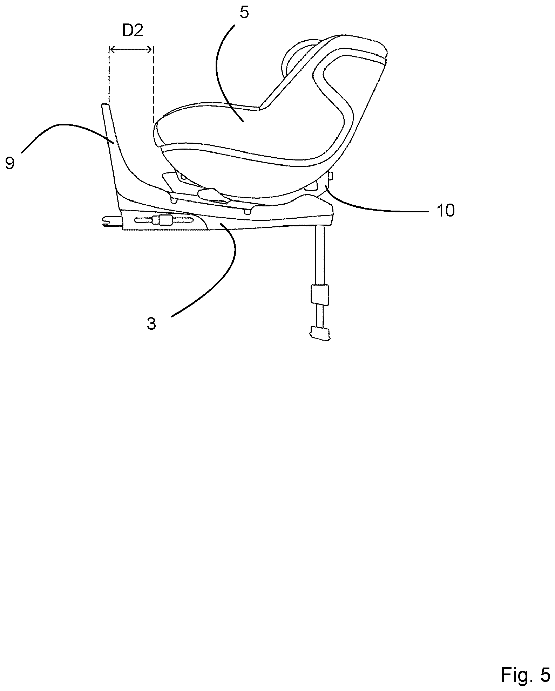

Figure 5 shows a distance D2 between a front end of the child seat 5 and the anti-rebound element 9 of the base 3, whereby the child seat 5 is in the second sliding position. As can be seen the sliding part 10 rests at a front side against the base 3, whereby the sliding part 10 is firmly supported by the base 3 in case of an accident.

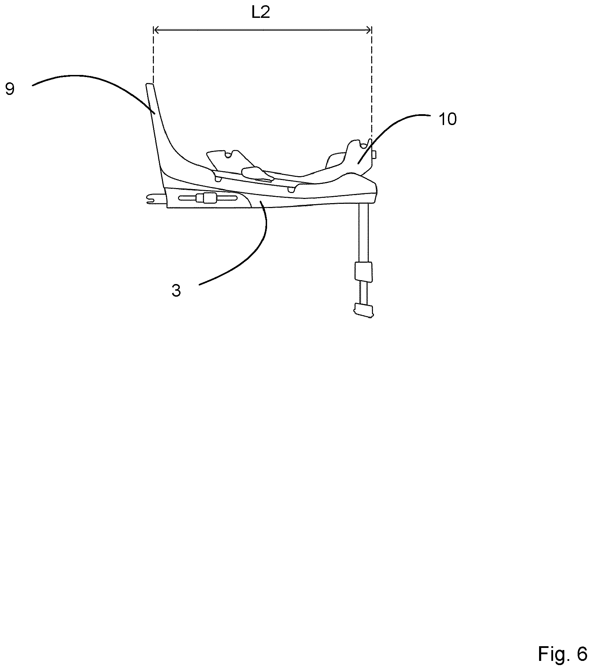

Figure 6 shows a distance L2 between a front end of the anti-rebound element 9 of the base 3 and a front end of a sliding part 10 of the child vehicle seat 1, whereby the sliding part 10 is in the second sliding position.

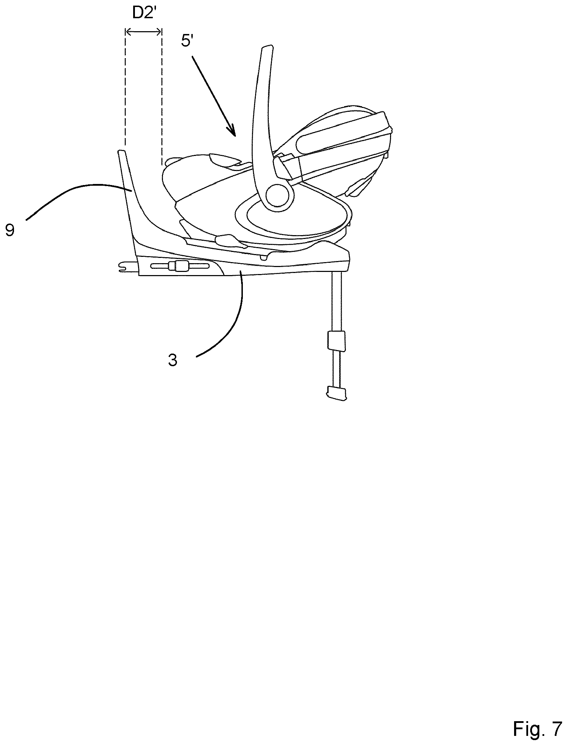

Figure 7 shows a distance D2' between a front end of another kind of a child seat 5' and the anti-rebound element 9 of the base 3. This child seat 5' is also mounted in a rearward facing orientation and is in the second sliding position.

As can be seen, the distances D1, D1', L1 in the first sliding position are smaller than the distances D2, D2', L2 in the second sliding position. Due to EU R129 regulation the maximum width of a car seat is 44 centimeters, meaning that the rotation element 11 can be maximum 44 centimeter in diameter. In the shown embodiment the rotating element 11 is about 39 centimeters.

D1, D1' can be in a range from 0-5 centimeters depending on the size and position of the leg part of the child seat.

L1 can be in a range from 40-60 centimeters, for example 50 centimeters.

D1, D1' can be in a range from 5-10 centimeters depending on the size and position of the leg part of the child seat. The dimensions can of course be different for other kind of cars and with other regulations.

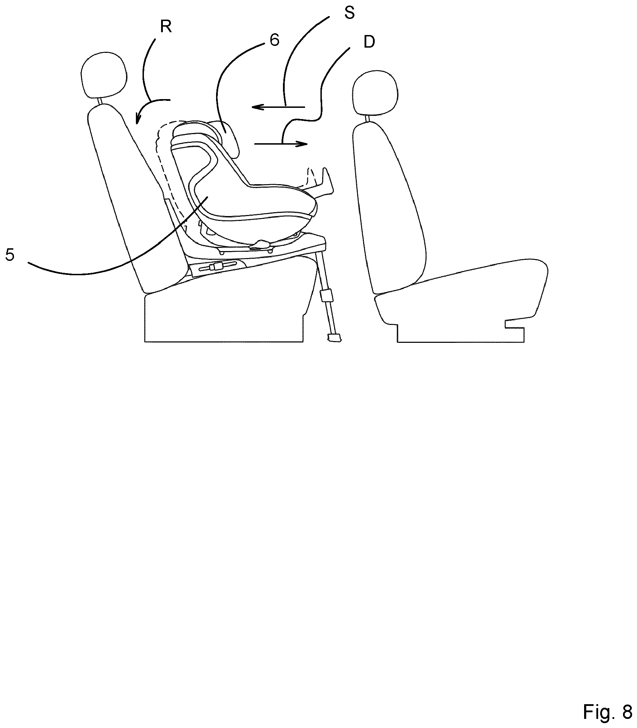

In the orientation as shown in figure 8 the child is facing forwardly seen in the driving direction D of the vehicle. This is the forward-facing position.

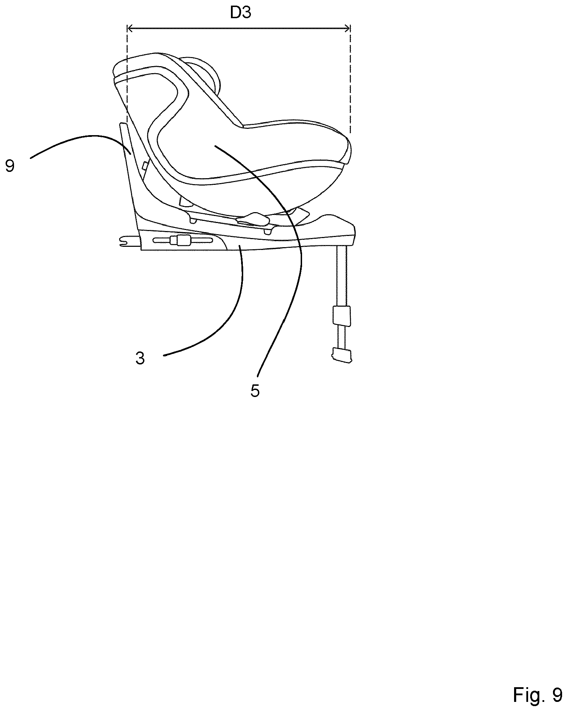

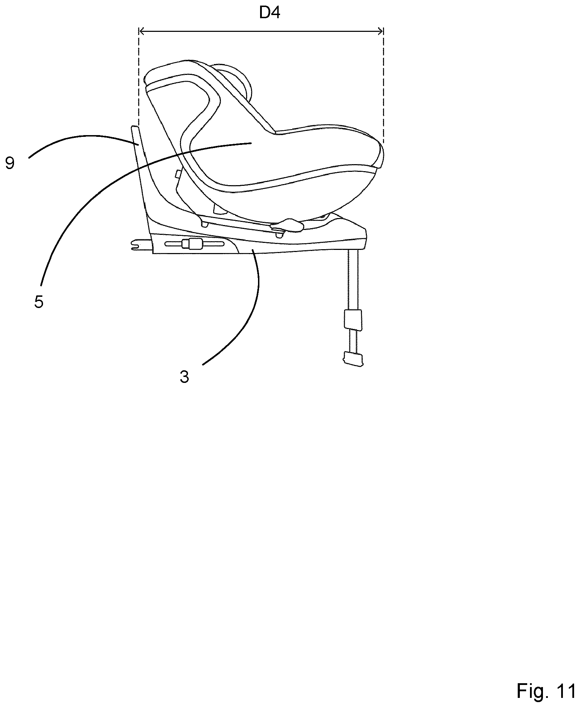

A child 6 can sit in the child seat 5, whereby its legs 7 are directed towards the front vehicle seat. As will be explained here below the child seat 5 is slidable as a whole in a sliding direction S extending parallel but opposite to the driving direction D from a first sliding position (in solid lines) to a second sliding position (in dotted lines). Preferably the child seat 5 can be reclined in a direction indicated by arrow R from the seating position as shown in figure 8 to a reclined position as shown in the figures 9 and 11. If the child seat 5 when being reclined will abut against the vehicle seat 2 in the first sliding position, the child seat 5 can be slit towards the first sliding position to be able to recline the child seat 5 further to a desired amount.

Figure 9 shows a distance D3 between a front end of the child seat 5 and the anti-rebound element 9 of the base 3, whereby the child seat 5 is in a forward-facing position and in the second sliding position.

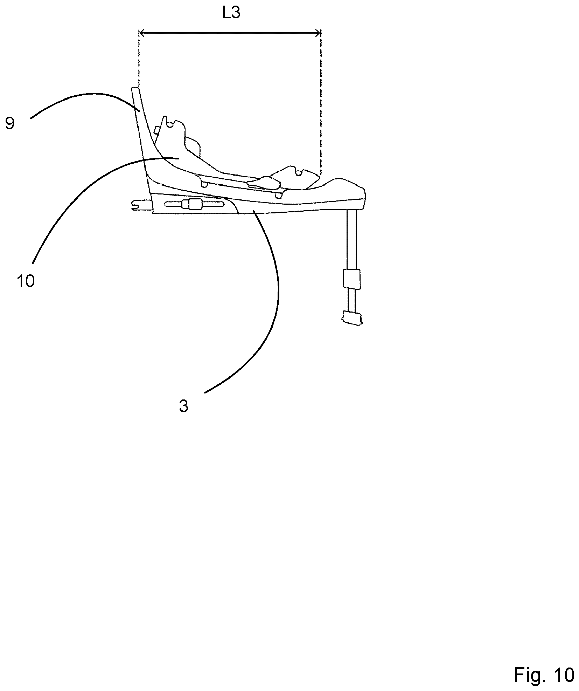

Figure 10 shows a distance L3 between the anti-rebound element 9 of the base 3 and a front end of a sliding part 10 of the child vehicle seat 1, whereby the sliding part 10 is in a forward-facing position and in the second sliding position.

Figure 11 shows a distance D4 between a front end of the child seat 5 and the anti-rebound element 9 of the base 3, whereby the child seat 5 is in a forward-facing position and in the first sliding position.

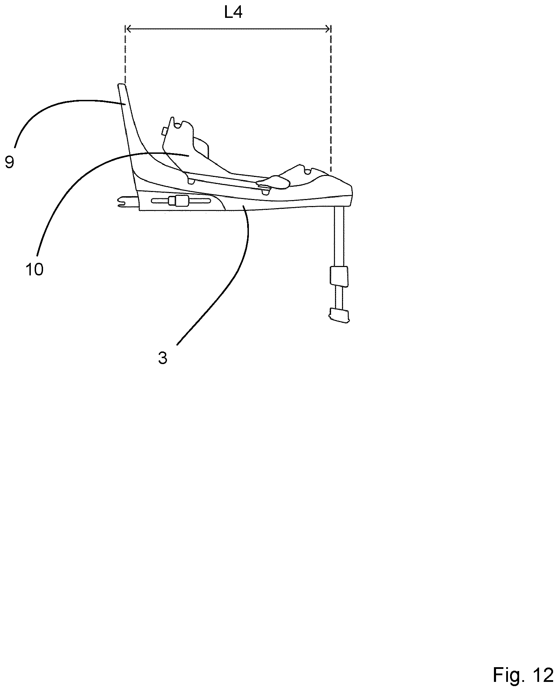

Figure 12 shows a distance L4 between the anti-rebound element 9 of the base 3 and a front end of a sliding part 10 of the child vehicle seat 1, whereby the sliding part 10 is in a forward-facing position and in the first sliding position.

As can be seen, the distances D3, L3 in the second sliding position are smaller than the distances D4, L4 in the first sliding position.

The first sliding position offers the opportunity to recline without touching the backrest and to recline more that in the second sliding position. The second sliding position offers the child more leg space.

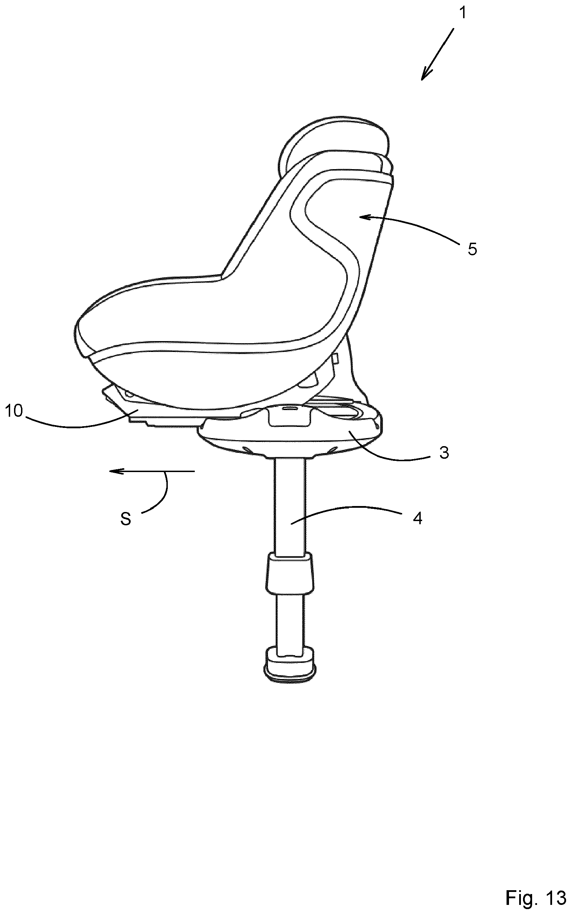

Figure 13 is a front view of child vehicle seat 1 with the child seat 5 in a side facing orientation. The child seat 5 together with the sliding part are rotated towards the door of the vehicle and are being moved in the sliding direction S, now extending perpendicular to the driving direction, towards the door of the vehicle to a third sliding position. The third sliding position is located at a greater distance from the first sliding position than the second sliding position. The third sliding position can be at a distance from the first sliding position in a range of for example 15-20 centimetres or even more if telescopic sliding parts are being used.

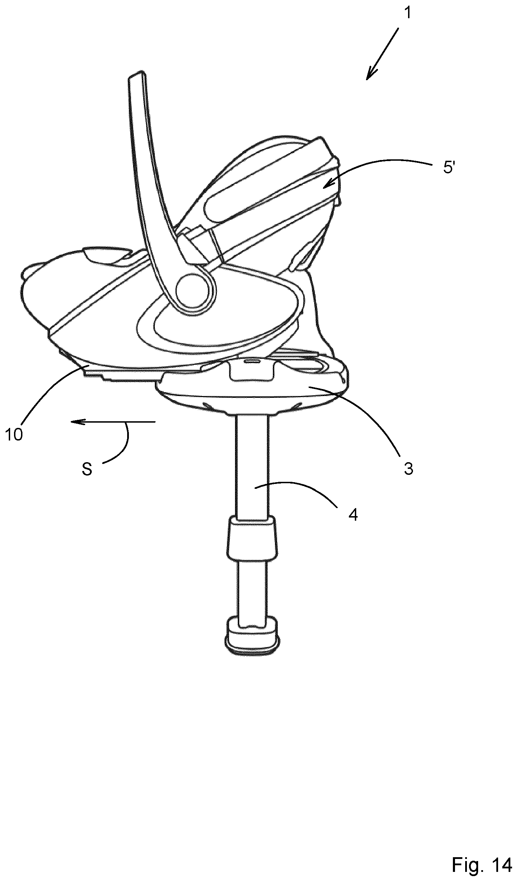

Figure 14 is a front view being similar to figure 13 but showing the child vehicle seat 1 with a second child seat 5.

The child vehicle seat 1 will know be described in more detail.

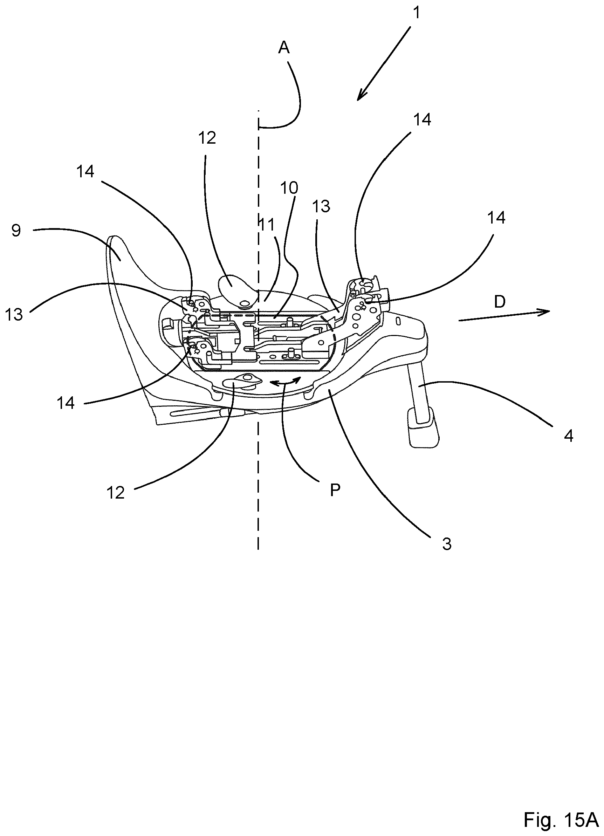

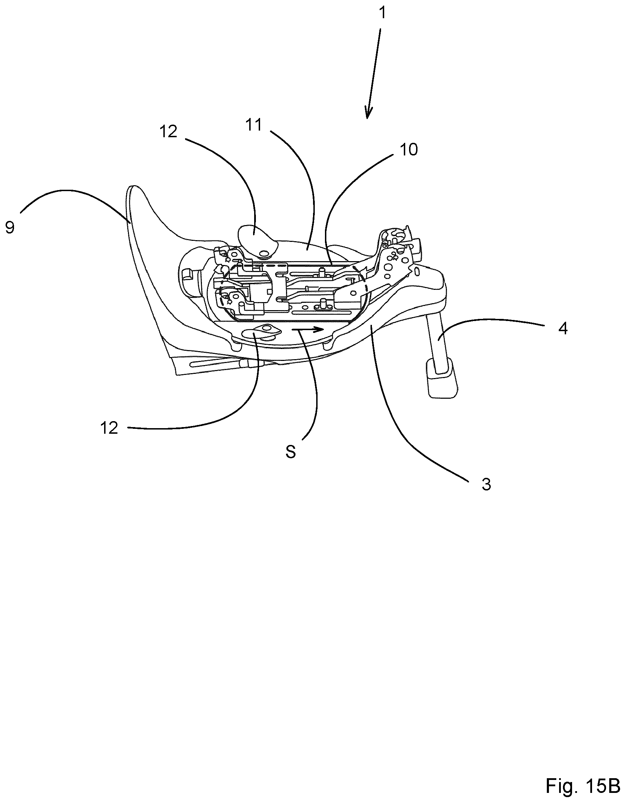

Figures 15A and 15B show perspective open views of the child vehicle seat 1 without a child seat and without a cover covering the sliding part 10 and the rotating part 11 located below the sliding part 10. The sliding part is a rearward facing position.

In figure 15A the sliding part 10 is in the first sliding position. In figure 15B the sliding part 10 is in the second sliding position.

The rotating part 11 is rotatable with respect to the base 2 about a rotation axis A in the direction of double arrow P from the forward-facing position via a side facing position to a rearward facing position and vice versa. The rotating part 11 can be locked in at least the forward facing position and the rearward facing position by first locking means. The first locking means can be unlocked by means of actuators 12 located on opposite sides of the rotating part 11. The sliding part 10 is located on top of the rotating part 11. Mounted on top of the sliding part 10 is a mounting element 13 provided with hooks 14 to detachably holding the child seat 5, 5'.

The sliding part 10 is slidable with respect to the rotating part 11 in the sliding direction S. In case that the sliding part 10 is in its forward facing position or in its rearward facing position, the sliding direction S extends parallel to the driving direction D. In case that the sliding part 10 is in its side facing position, the sliding direction S extends towards the door of the vehicle and extends mostly substantially perpendicular to the driving direction D. The child seat 5 is connected via the mounting element 13 to the sliding part 10 and will move as a whole with the sliding part 10 in the sliding direction S with respect to the rotating part 11. The child vehicle seat 1 comprises second locking means to detachably lock sliding of the sliding part 10 with respect to the rotating part 11 in the first sliding position and the second sliding position respectively.

Several embodiments of second locking means as well as unlocking means to unlock the second locking means will be explained here below.

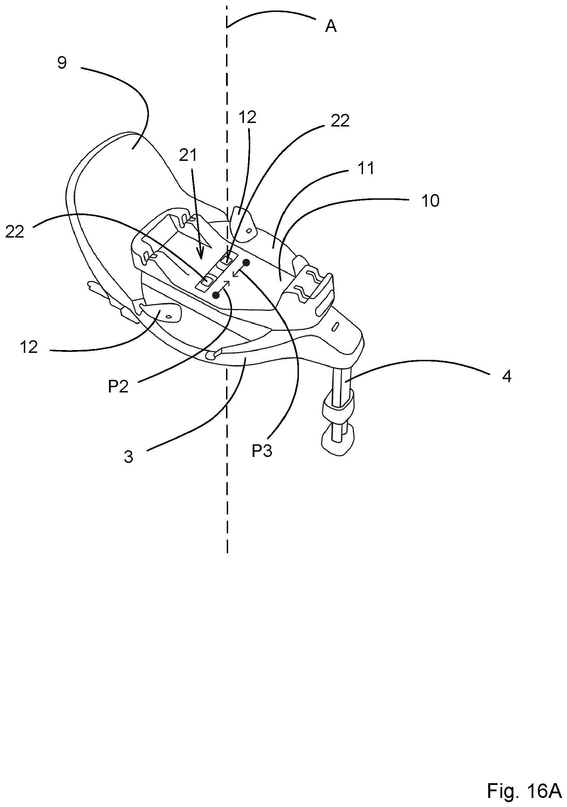

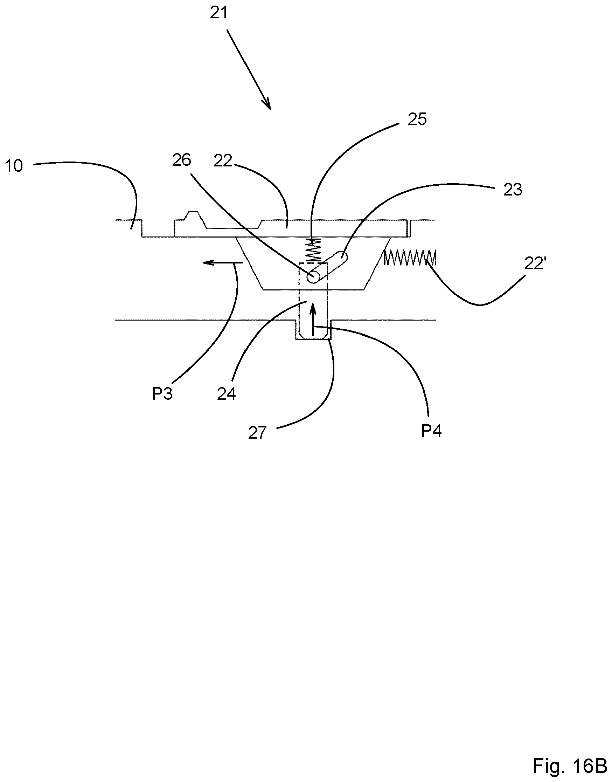

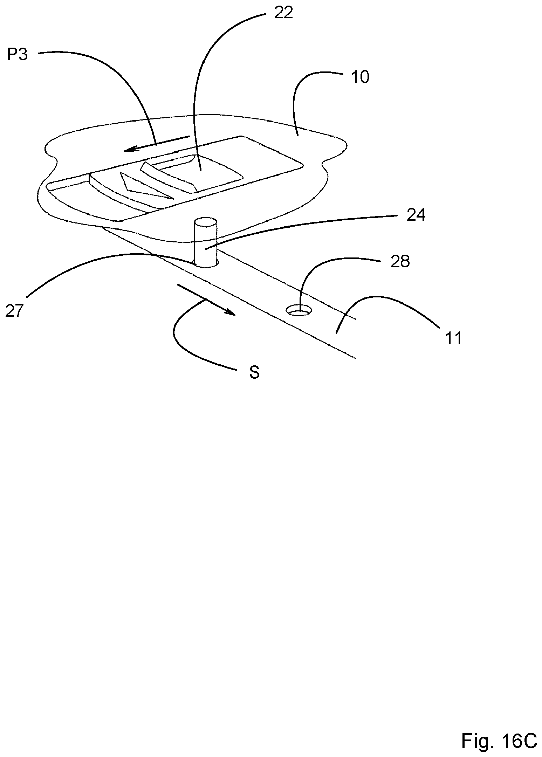

Figures 16A-C show a first embodiment of an unlocking mechanism 21 being accessible when the child seat 5, 5' is being removed from the base 3. The unlocking mechanism 21 comprises two switches 22 being movable against spring force of a spring 22' in directions indicated by arrows P2, P3. The switches 22 are located on the sliding part 10. Each switch 22 comprises a slot 23 extending under an angle between 20 and 70 degrees with the rotating axis A. The sliding part 10 and the rotating part 11 comprise second locking means. The second locking means comprises pens 24 connected to the slding part 10. Each pen 24 is movable against spring force of spring 25 in a direction extending parallel to the rotation axis A. Each pen 24 is provided with a locking pin 26 being slideably located in the slot 23 of the corresponding switch 22. When the switch 22 is moved in the direction indicated by arrow P3, the locking pin 26 of the pen 24 will be moved in the slot 23, thereby moving the pen 24 upwards against spring force in a direction indicated by arrow P4 and out of a passage 27, 28 located in the rotating part 11. The at least two passages 27, 28 in the rotating part 11 forms part of the second locking means. As soon as the pens 24 are out of the passage 27, the sliding part 10 can be slit in the sliding direction S until the pen 24 will be moved under spring force of spring 25 into the other passage 28. The passage 27 defines the first sliding position whilst the passage 28 defines the second sliding position.

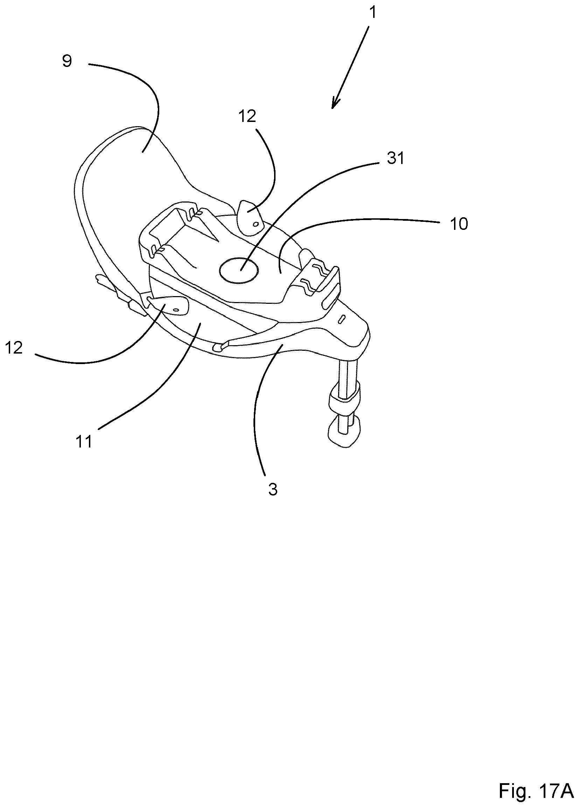

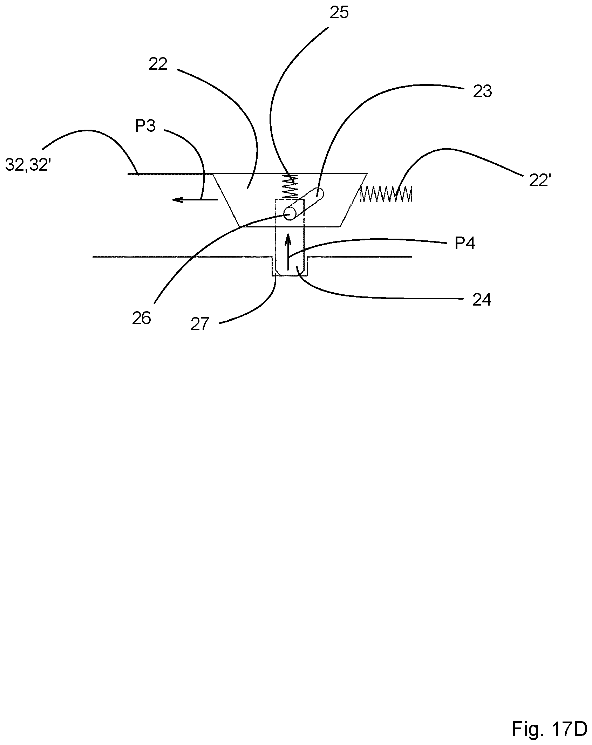

Figures 17A-D show a second embodiment of an unlocking mechanism 31, 31' being accessible when the child seat 5, 5' is being removed from the base 3.

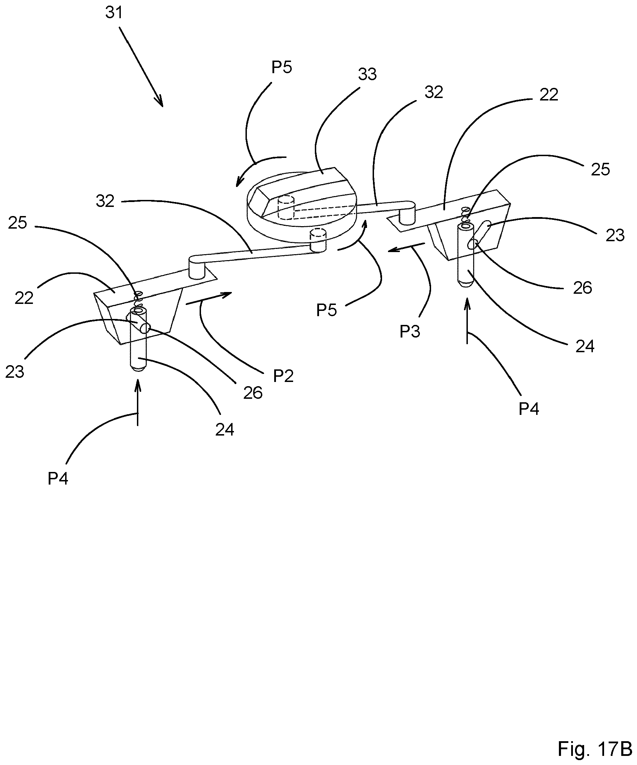

The unlocking mechanism 31 as shown in figure 17B comprises two switches 22 being similar to the switches of unlocking mechanism 21. Each switch 22 is connected via an arm 32 to a rotatable disc 33. By rotating the disc 33 in the direction indicated by arrow P5, the switches 22 are being moved simultaneously in the directions indicated by arrows P2, P3, thereby moving the pens 24 in the direction indicated by arrow P4 out of the respective passage 27, 28.

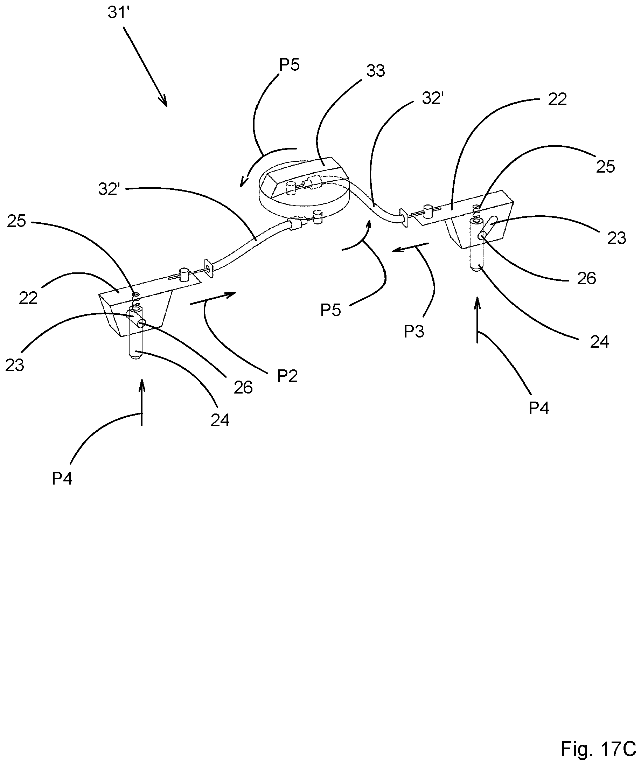

The unlocking mechanism 31' as shown in figure 17C comprises two switches 22 being similar to the switches of unlocking mechanism 21. Each switch 22 is connected via a Bowden cable 32' to a rotatable disc 33. By rotating the disc 33 in the direction indicated by arrow P5, the switches 22 are being moved simultaneously in the directions indicated by arrows P2, P3, thereby moving the pens 24 in the direction indicated by arrow P4 out of the respective passage 27, 28.

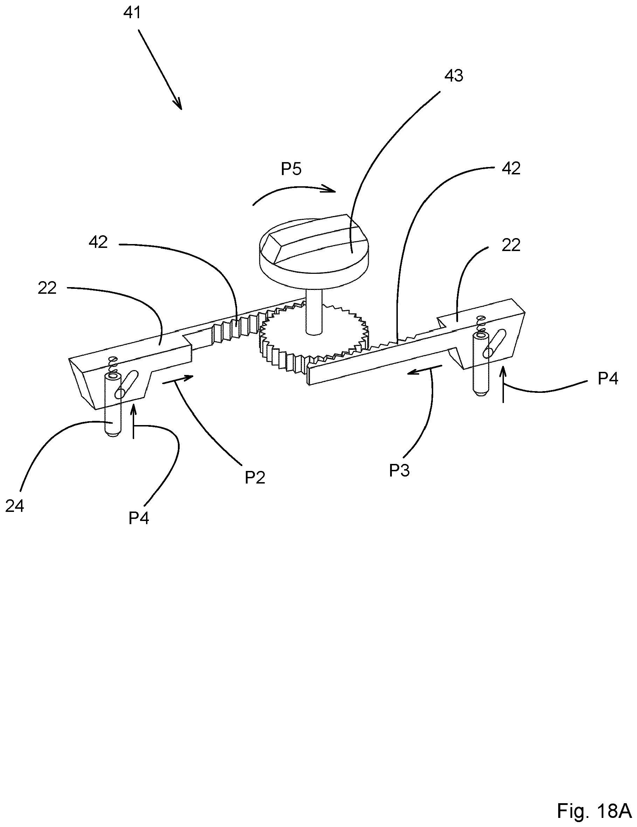

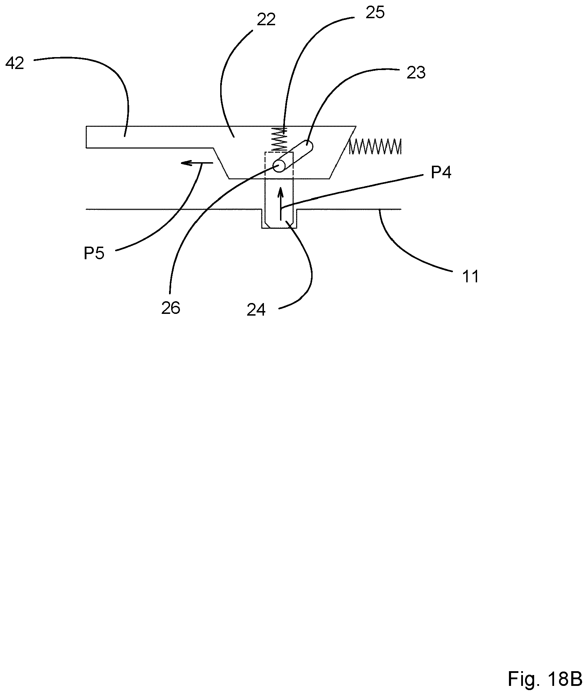

Figures 18A-B show a third embodiment of an unlocking mechanism 41 being accessible when the child seat 5, 5' is being removed from the base 3. The unlocking mechanism 41 comprises two switches 22 being similar to the switches of unlocking mechanisms 21, 31. Each switch 22 is connected via a toothed rack 42 to a rotatable gear 43. By rotating the disc 33 in the direction indicated by arrow P5, the switches 22 are being moved simultaneously in the directions indicated by arrows P2, P3, thereby moving the pens 24 in the direction indicated by arrow P4 out of the respective passage 27, 28.

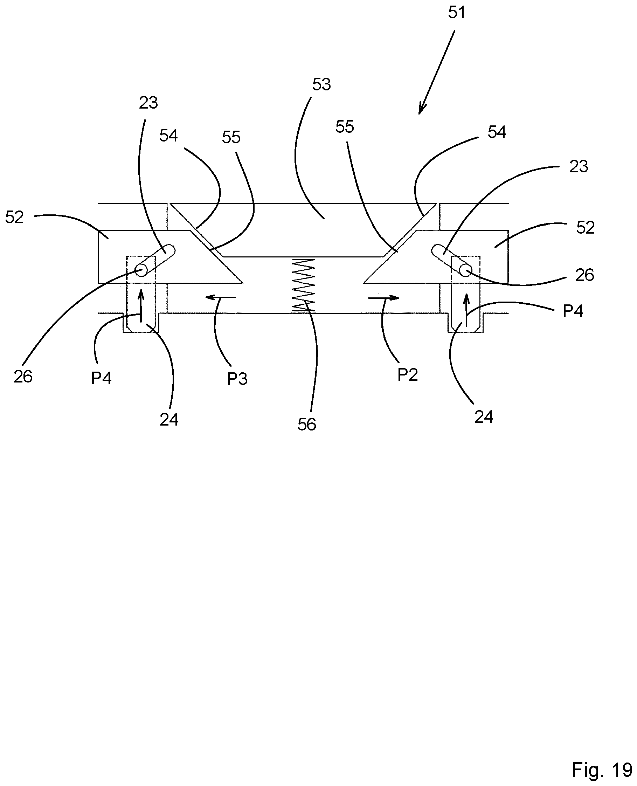

Figure 19 show a fourth embodiment of an unlocking mechanism 51 being accessible when the child seat 5, 5' is being removed from the base 3. The unlocking mechanism 51 comprises two switches 52 being similar to the switches of unlocking mechanisms 21, 31, 41. The unlocking means 51 comprises a push button 53 provided with inclined surfaces 54 cooperating with inclined surfaces 55 of the switches 22. By pushing the push button 53 against spring force of spring 56, the switches are being moved simultaneously away from each other in the directions indicated by arrows P2, P3, thereby moving the pens 24 in the direction indicated by arrow P4 out of the respective passage 27, 28.

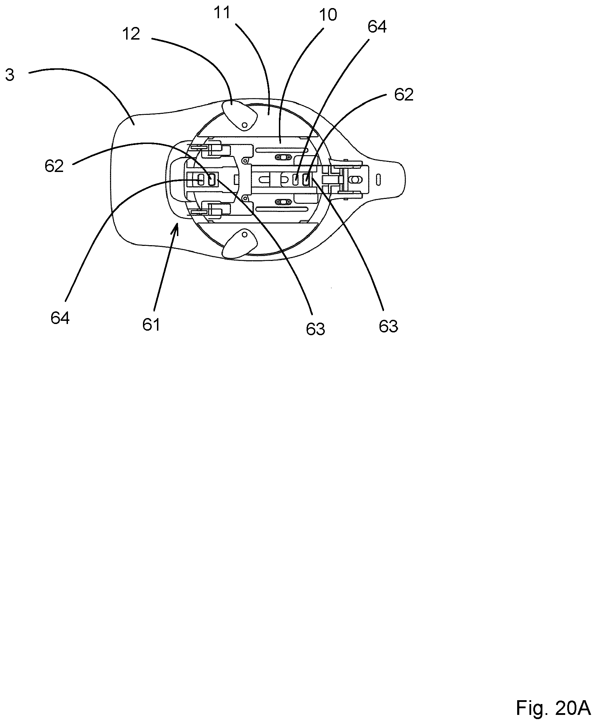

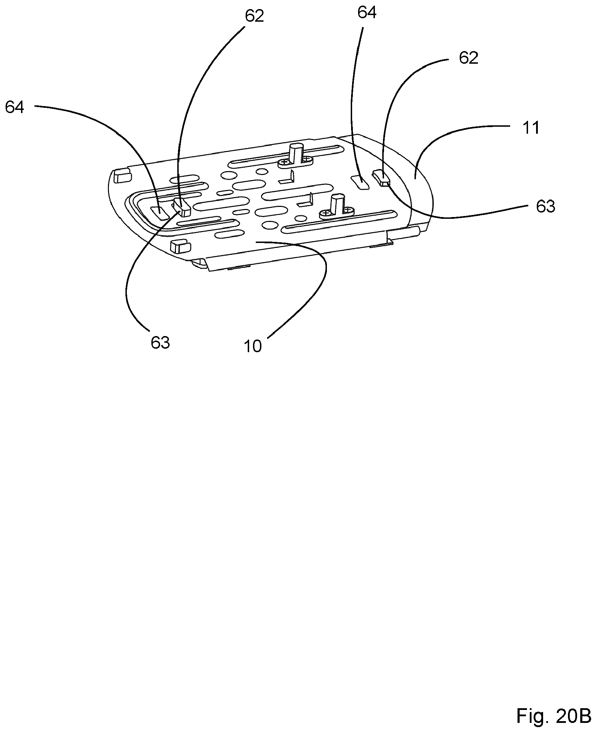

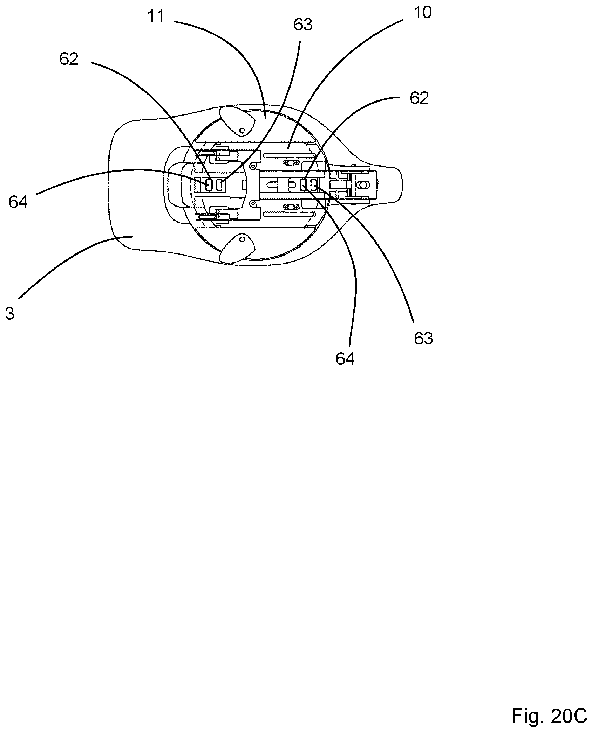

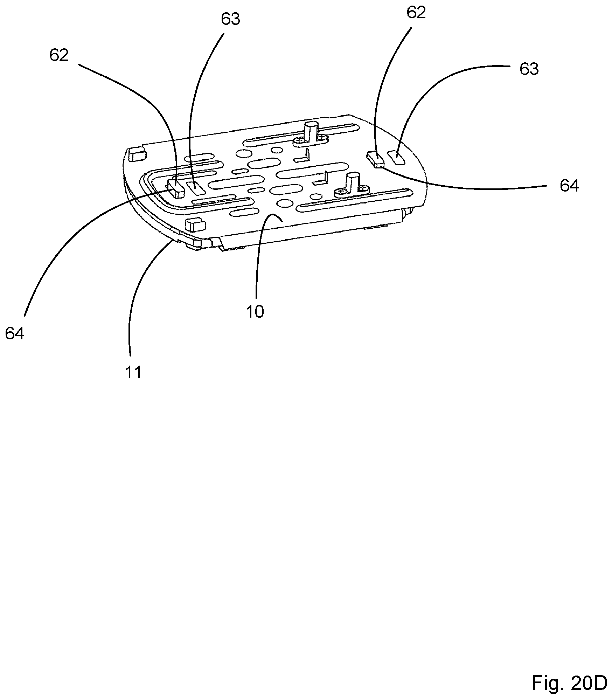

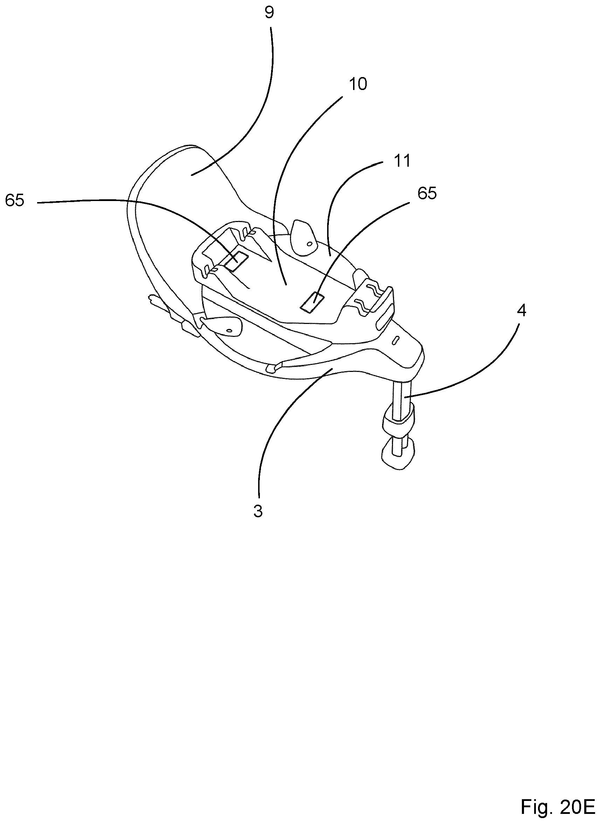

Figures 20A-D show a fifth embodiment of an second locking mechanism 61. The second locking mechanism 61 comprises two pens 62 which can be positioned in respectively a first set of passages 63 defining the first sliding position (figures 20A-B) or a second set of passages 64 defining the first sliding position (figures 20C-D). The pens are located on the rotating part 11 whilst the passages 63, 64 are located in the sliding part 10. As can be seen in figure 20E the pens 62 can be operated via push buttons 65 on the sliding part 10.

It is also possible to have only one passage 63, one passage 64 and one pen 62 in which case only one push button 65 will be needed.

The push button 65 are accessible when the child seat 5, 5' is being removed from the base 3.

The pens 62 are located on a central line whilst the pens 24 are located at a distance from a central line. However, the location of the pens 24, 62 can be any suitable position on the rotating part 11 or the sliding part 10.

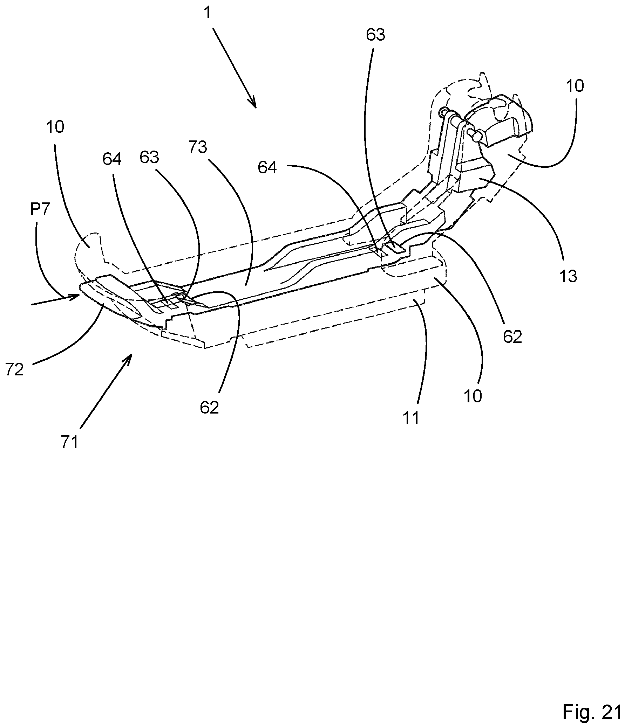

Figures 21-23 show a sixth embodiment of a locking and unlocking mechanism 71 being accessible when the child seat 5, 5' is being connected to the base 3.

The locking mechanism is the same as shown in the figures 20A-D. The locking and unlocking mechanism 71 comprise a handle 72 provided with a handle part 73 extending above the four passages 63, 64 in the sliding part 10,

The handle part 73 is provided with two opening 74 (one being visible) through which the pens 62 extends when the pens 62 are located in one of the passages 63 or 64 in the sliding part 10. The pens 62 are movably supported by the rotating part 11 being located between the sliding part 10 and a part of the base 3. The rotating part 11 is rotatable together with the sliding part 10 with respect to the base 3 about an axis 83 in and opposite to the direction as indicated by arrow P8 but is not slidable with respect to the base 3. Each pen 62 is provide on one side with a relatively long inclined surface 76 and on an opposite side with a relatively short, inclined surface 77. On a side of the relatively long inclined surface 76, the opening 74 is provided with a similar inclined surface 78. Each passage 64 is provided with an inclined surface 79 for cooperation with the short, inclined surface 77. Each passage 63 is provided with an inclined surface 80 for cooperation with the long, inclined surface 76. Each pen 62 is located in a hole 81 of the rotating part 10 and is movable against spring force of spring 82 in a direction indicated by arrow P6.

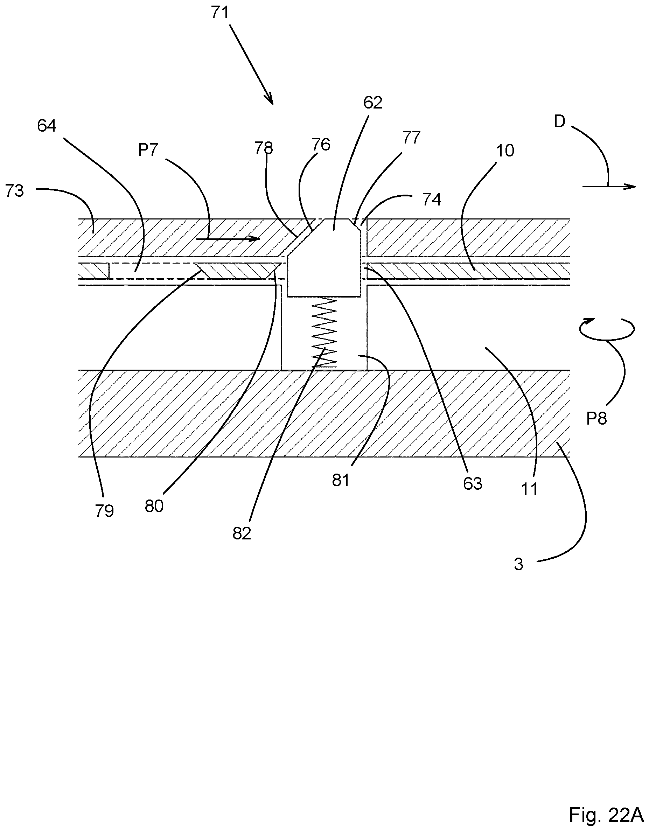

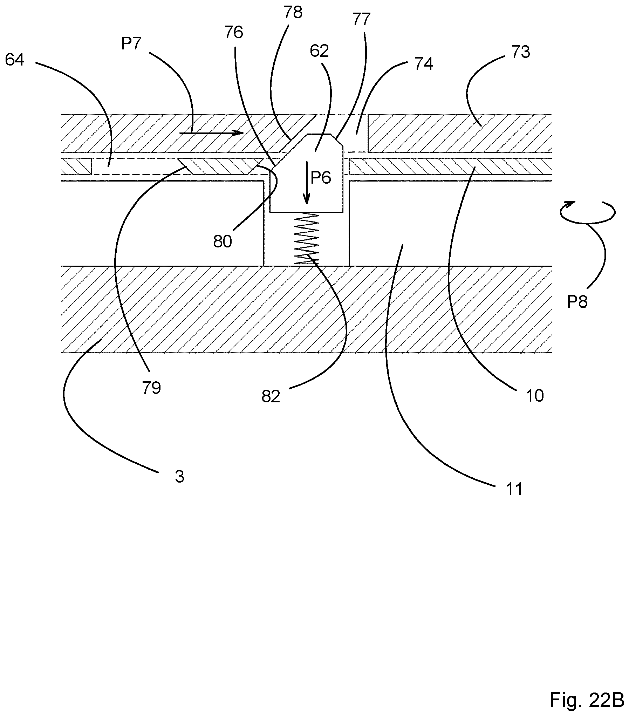

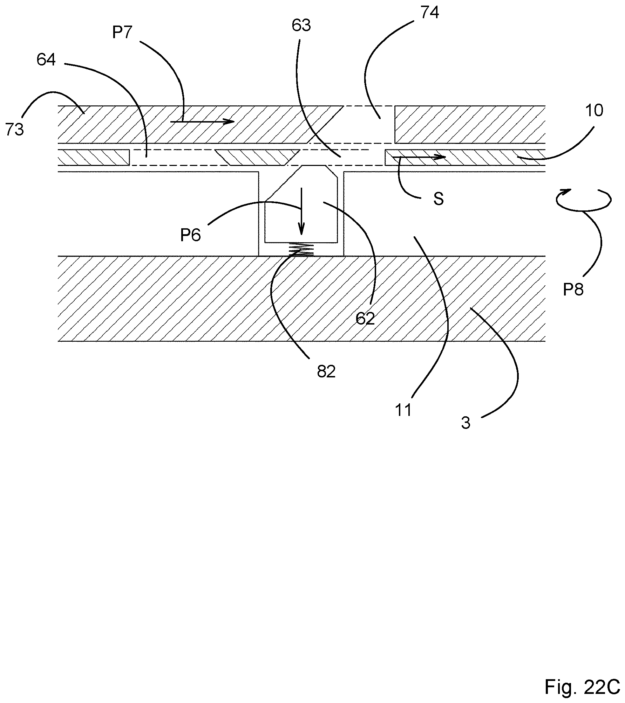

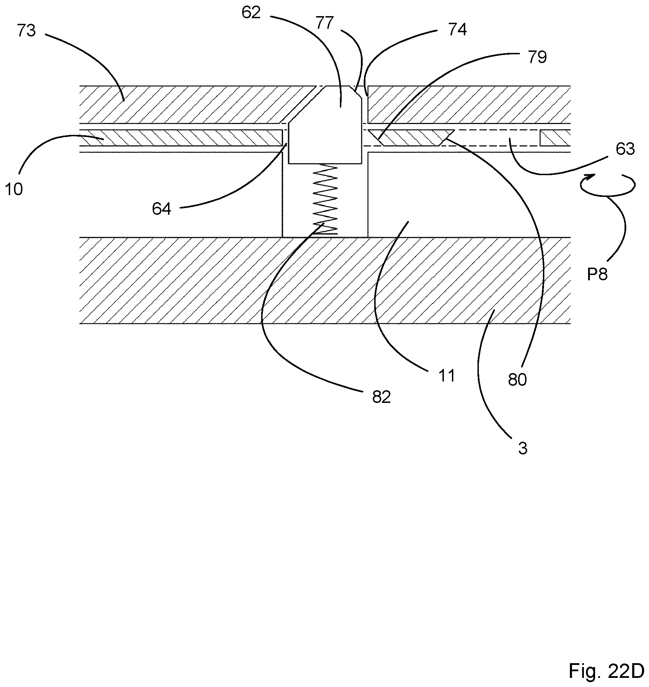

In the situation as shown in the figures 21, 22A and 22B, whereby the child seat is in a forward facing or a rearward facing position, the sliding part 10 is located in the first sliding position, whereby the pens 62 are located in the passages 63 of the sliding part 10. If a user wants to move the sliding part 10 and the whole child seat 5, 5' mounted thereon to the second sliding position, the user pushes the handle 72 in the direction indicated by arrow P7. By doing so, the inclined surface 78 of the handle part 73 pushes against the inclined surface 76, thereby forcing the pen 62 to be moved against spring force of spring 62 in the direction indicated by arrow P6 (see figure 22B) out of the opening 74. As soon as the pen 62 is out of the opening 74, the user can push the sliding part 10 in the sliding direction S towards the second sliding position, whereby the inclined surface 80 of the sliding part 10 pushes against the inclined surface 76 of the pen 62, thereby forcing the pen 62 to be moved against spring force of spring 82 further in the direction indicated by arrow P6 (see figure 22B) out of the passage 63 of the sliding part 10. As soon as the pen 62 is out of the passage 63, the user can push the sliding part 10 in the sliding direction S towards the second sliding position (see figure 22C). As soon as the sliding part 10 reaches the second sliding position, the pen 62 will be moved under spring force of spring 82 upwards in a direction opposite to arrow P6 into the passage 64. By releasing the handle 72, the handle 72 and the handle part 73 will move back under spring force to the initial position whereby the opening 74 is located above the hole 81 of the rotating part 10 so that the pen 62 will also be moved into the opening 74 of the handle part 73 thereby locking the pen 62 (see figure 22D).

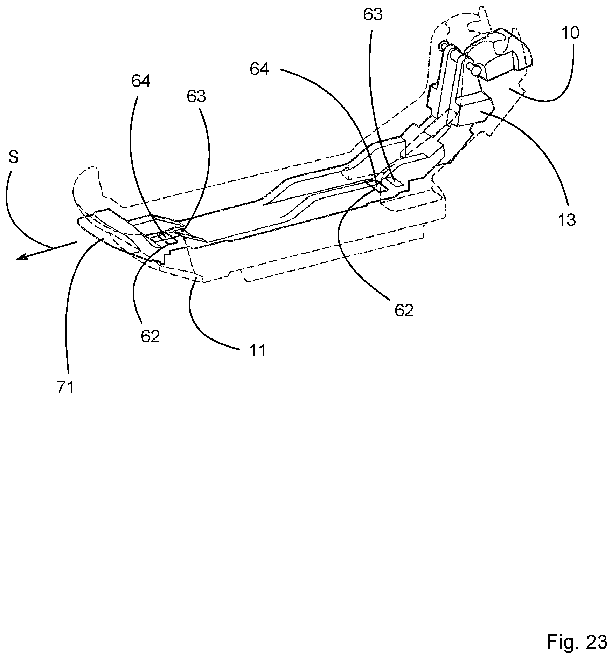

For moving the sliding part 10 from the second sliding position to the first sliding position, a user pushes again on the handle 71 to unlock the pen 62 from the opening 74. Subsequently the user will move the sliding part 10 into the sliding direction from the second to the first sliding position, whereby the inclined surface 79 of the sliding part 10 pushes against the inclined surface 77 of the pen 62, thereby forcing the pen 62 to be moved out of the opening 63 of the sliding part 10. As soon as the pen 62 is out of the opening 63, the user can push the sliding part 10 in the sliding direction S towards the first sliding position (see figure 23).

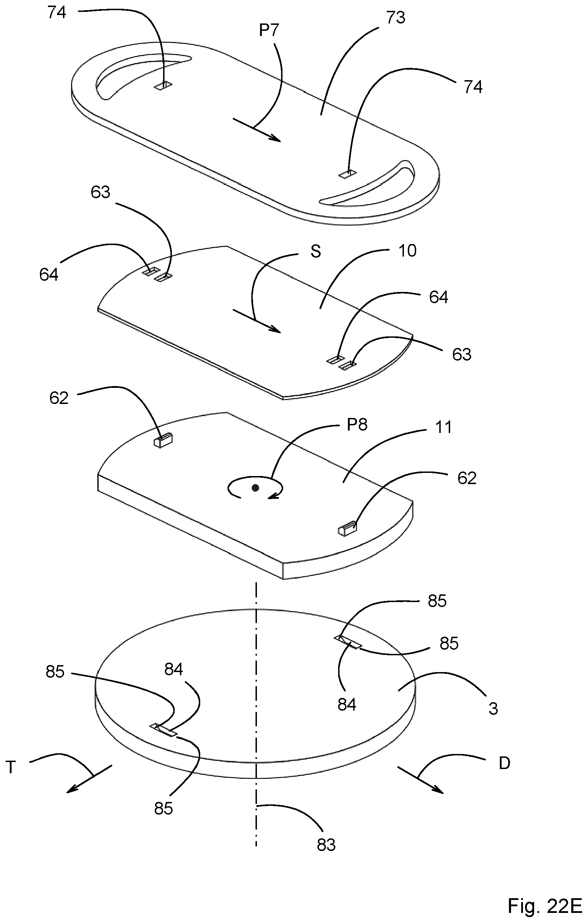

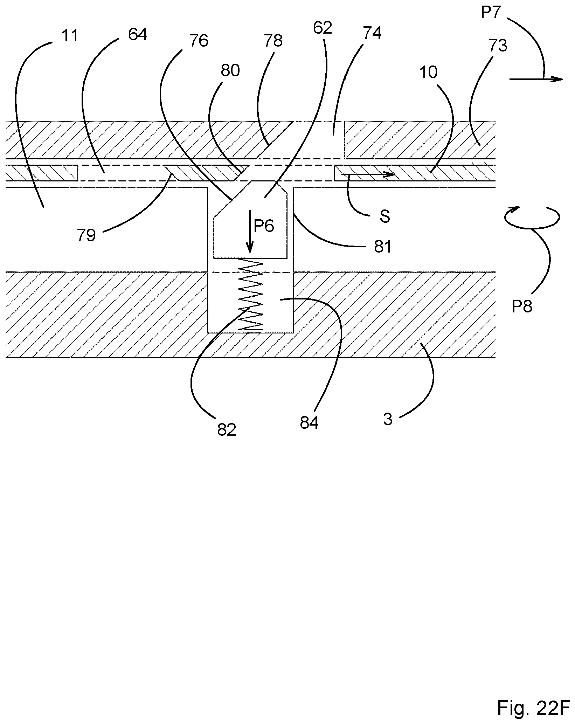

As can be seen in figures 22E and 22F, when rotating the rotating part 11, together with the sliding part 10 and the other parts mounted thereon about the rotating axis 83 in or opposite to the direction as indicated by arrow P towards a door of a vehicle, the rotating part 11 will be moved over the base 3. As soon as the rotating part 11 and the parts mounted thereon have been rotated towards the door, the directions as indicated by arrows P7, S extend substantially parallel to the direction as indicated by arrow T and substantially perpendicular towards the driving direction as indicated by arrow D. The base 3 is provided with two blind holes 84, each provided in circular direction on both ends with inclined walls 85. The pens 62 will drop into the blind holes 84 after which the sliding part 10 and the parts mounted thereon can freely be moved in the direction as indicated by the arrows S, T so that the child seat can be moved towards the door.

The length of the blind holes 84 in circular direction can be about the same as the dimension of the pens 62 in circular direction or can be a bit larger so that the pens 62 together with the rotating part 11 and the parts mounted thereon can rotated slightly back and forth. In this manner the angle between the directions T, D will be 90 degrees plus/minus a few degrees, thereby providing the possibility to amend the direction T to the location of the door opening of the vehicle.

When rotating the rotating part 11 and the parts mounted thereon back to the orientation as shown in figure 22E, the bottom of the pens 62 will be forced by the inclined walls 85 of the blind holes 84 to be moved out of the blind holes 84.

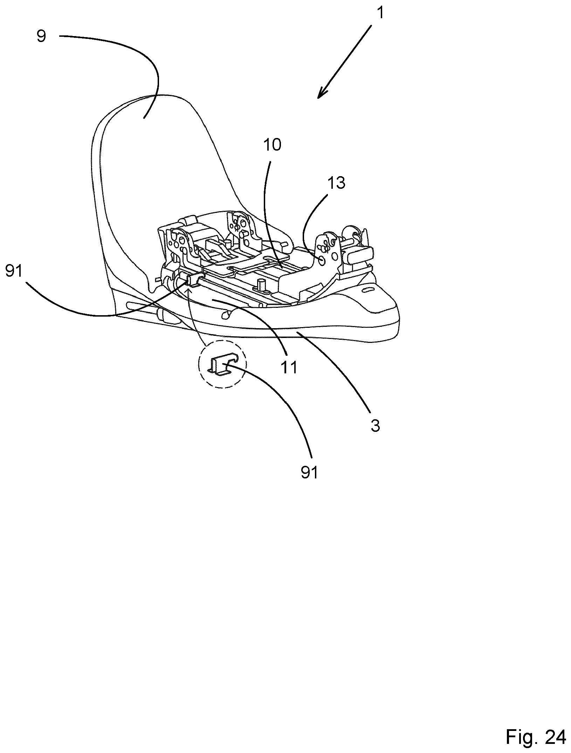

Figure 24 shows the base 3 with the rotating part 11 and the sliding part 10. The rotating part 11 is provided with a number of hooks 91 loosely located over rails 92 of the sliding part 10 for additionally ensuring that the sliding part 10 will be connected to the rotating part 11 in case of a car crash.

In a side facing position the sliding part 10 can be moved in the same manner with respect to the rotating part 11, to move the sliding part 10, the whole child seat 5, 5, 5' mounted thereon and the child sitting in the child seat 5, 5' towards the door to simplify the loading and unloading of the child from and into the child seat 5, 5'. It is possible to have more than two passages 62, 63 to provide more than two sliding positions.

It is possible that unlocking of the movement of the sliding part 10 and the movement between the sliding positions is only possible when the child seat is being removed from the sliding part 10. This is suitable for child vehicle seats whereby no movement of the sliding part 10 together with the whole child seat 5, 5' and the child in the side facing direction is needed or wanted.

If in the side facing direction movement of the sliding part 10 in the sliding direction S is wanted, the unlocking of the movement of the sliding part 10 must be accessible when the child seat 5, 5' is connected to the sliding part 10.

It is possible that that the rotating part 11 is only rotatable with respect to the base 3, when the sliding part 10 is in the first sliding position but not when the sliding part 10 is in the second sliding position. The first sliding position can be the first sliding position as decribed above, whereby the sliding part 10 is located close to the anti-rebound element 9. However, it is also possible in another embodiment that the rotating part 11 is rotatable with respect to the base 3, when the sliding part 10 is in the first sliding position as well as when the sliding part 10 is in the second sliding position

### LIST OF REFERENCE SIGNS

- 1: child vehicle seat
- 2: vehicle car seat
- 3: base
- 4: support leg
- 5: child seat
- 5': child seat
- 6: child
- 7: leg
- 8: foot
- 9: anti-rebound element
- 10: sliding part
- 11: rotating element
- 12: actuator
- 13: mounting element
- 14: hook
- 21: unlocking mechanism
- 22: switch
- 22': spring
- 23: slot
- 24: pen
- 25: spring
- 26: locking pin
- 27: passage
- 28: passage
- 31: unlocking mechanism
- 31': unlocking mechanism
- 32: arm
- 32': Bowden cable
- 33: disc
- 41: unlocking mechanism
- 42: toothed rack
- 43: rotatable gear
- 51: unlocking mechanism
- 52: switch
- 53: push button
- 54: inclined surface
- 55: inclined surface
- 56: spring force
- 61: second locking mechanism
- 62: pen
- 63: passage
- 64: passage
- 65: push button
- 71: unlocking mechanism
- 72: handle
- 73: handle part
- 74: opening
- 76: long inclined surface
- 77: short inclined surface
- 78: inclined surface
- 79: inclined surface
- 8o: inclined surface
- 81: hole
- 82: spring force
- 83: rotating axis
- 84: blind hole
- 85: inclined wall
- 91: hook
- 92: rail
- A: rotating axis
- D: driving direction
- D1: distance
- D1': distance
- D2: distance
- D2': distance
- D3: distance
- D4: distance
- L1: distance
- L2: distance
- L3: distance
- L4: distance
- P: arrow
- P2: arrow
- P3: arrow
- P4: arrow
- P5: arrow
- P6: arrow
- P7: arrow
- P8: arrow
- R: arrow
- S: sliding direction
- T: arrow

## Claims

1. A child vehicle (1) seat comprising a base (3) detachably connectable to a vehicle seat (1), a rotating part (11) being rotatably connected to the base (3), whereby the rotating part (11) being rotatable with respect to the base (3) about a rotation axis (A) from at least a forward facing position to a rearward facing position seen in a driving directing (D) of the vehicle in use and vice versa, a sliding part (10) being slidably connected to the base (3), whereby the sliding part (10) being slidable with respect to the base (3) in a sliding direction (S), a child seat (5, 5') connected to the base (3) via the sliding part (10) and the rotating part (11), **characterized in that** the whole child seat (5, 5') and the sliding part (10) are slidable together with respect to the rotating part (11) in the sliding direction (S) extending substantially parallel to the driving direction (D) of the vehicle from at least a first sliding position to a second sliding position and vice versa, wherein the child vehicle seat (1) comprises first locking means to detachably lock the rotating part (11) to the base (3) in at least the forward facing position and the rearward facing position respectively as well as second locking means (61) to detachably lock sliding of the sliding part (10) with respect to the rotating part (11) in the first sliding position and the second sliding position respectively.

2. A child vehicle seat (1) according to claim 1, **characterized in that** the rotating part (11) is rotatable with respect to the base (3), when the sliding part (10) is in the first sliding position but not when the sliding part (10) is in the second sliding position.

3. A child vehicle seat (1) according to claim 2, **characterized in that** in the second sliding position the whole child seat (5, 5') is located further in the driving direction (D) of the vehicle than in the first sliding position, whereby the child seat (5, 5') is in a rearward facing position.

4. A child vehicle seat (1) according to claim 2, **characterized in that** in the first sliding position the whole child seat (5, 5') is located further in the driving direction (D) of the vehicle than in the second sliding position, whereby the child seat (5, 5') is in a forward position.

5. A child vehicle seat (1) according to one of the preceding claims, **characterized in that** the rotating part (11) is rotatable from at least the forward facing position or the rearward facing position to a side facing position directed to a door of the vehicle and vice versa, whereby in the side facing position the whole child seat (5, 5') and the sliding part (10) are slidable together with respect to the rotating part (11) in the sliding direction (S) extending substantially perpendicular to the driving direction (D) of the vehicle.

6. A child vehicle seat (1) according to one of the preceding claims, **characterized in that** the second locking means (61) comprises at least one pen (24, 62) being movable against spring force in a direction extending parallel to the rotation axis (A), which pen (24, 62) cooperates with at least two passages (27, 28, 63, 64), whereby the pen (24, 62) is movable connected to the sliding part (10) whilst the at least two passages (27, 28, 63, 64) are located in the rotating part (11) or vice versa, whereby when the pen (24, 62) is located in a first passage of the at least two passages (27, 28, 63, 64), the sliding part (10) is locked in the first sliding position whilst when the pen (24, 62) is located in a second passage the at least two passages (27, 28, 63, 64), the sliding part (10) is locked in the second sliding position.

7. A child vehicle seat (1) according to claim 6, **characterized in that** the child vehicle seat (1) comprises unlocking means to unlock the second locking means, which unlocking means comprises a switch (22, 52) provided with a slot (23) extending under an angle between 20 and 70 degrees with the rotating axis (A), whereby the pen (24, 62) is provided with a locking pin (26) being slideably located in the slot (23), which switch (22, 52) is movable against spring force, thereby moving the pen (42, 62) out of the passage (27, 28, 63, 64).

8. A child vehicle seat (1) according to claim 7, **characterized in that** the unlocking means comprises a rotatable element (33, 43) cooperating with two switches (22, 52), each cooperating with a pen (24, 62), whereby by rotating the rotatable element against spring force, the switches (22, 52) are movable, thereby moving the pens (24, 62) out of the respective passages (27, 28, 63, 64).

9. A child vehicle seat (1) according to claim 7, **characterized in that** the unlocking means comprises a push button (53, 65) cooperating with at least one switch (22, 52) cooperating with a pen (24, 62), whereby by pushing the push button (53, 65) against spring force, the switch (22, 52) is movable, thereby moving the pens (24, 62) out of the respective passages (27, 28, 63, 64).

10. A child vehicle seat (1) according to claim 6, **characterized in that** the pen (24, 62) is movable connected to the rotating part (11) whilst the at least two passages (27, 28, 63, 64) are located in the sliding part (10), whereby the child vehicle seat (1) comprises unlocking means to unlock the second locking means, which unlocking means comprises a handle (72) provided with a handle part (73) is provided with an opening (74) through which the pen (24, 62) can extends when the pen (24, 62) is located in one of the passages (27, 28, 63, 64) in the sliding part (10), whereby the pen (24, 62) is movable against spring force by firstly moving the handle part (73) to move the pen (24, 62) out of the opening (74), and subsequently moving the sliding part (10), thereby moving the pen (24, 62) out of one of the passages (27, 28, 63, 64) until the pen (24, 62) is being moved under spring force into another one of the passages (27, 28, 63, 64) in the sliding part (10), whereafter the handle (72) is being released and the pen (24, 62) is being moved into the opening (74) of the handle part (73).

11. A base (3) suitable for a child vehicle seat (1) according to one of the preceding claims, which base (3) being detachably connectable to a vehicle seat (2), said base (3) comprises a rotating part (11) being rotatably connected to the base (3), whereby the rotating part (11) being rotatable with respect to the base (3) about a rotation axis (A) from at least a forward facing position to a rearward facing position seen in a driving directing (D) of the vehicle in use and vice versa, a sliding part (10) being slidably connected to the base (3), whereby the sliding part (10) being slidable with respect to the base (3) in a sliding direction (S), a child seat (5, 5') connected to the base (3) via the sliding part (10) and the rotating part (11), **characterized in that** the whole child seat (5, 5') and the sliding part (10) are slidable together with respect to the rotating part (11) in the sliding direction (S) extending substantially parallel to the driving direction (D) of the vehicle from at least a first sliding position to a second sliding position and vice versa, wherein the child vehicle seat (1) comprises first locking means to detachably lock the rotating part (11) to the base (3) in at least the forward facing position and the rearward facing position respectively as well as second locking means to detachably lock sliding of the sliding part (10) with respect to the rotating part (11) in the first sliding position and the second sliding position respectively.
